# EUROPEAN PATENT APPLICATION

(11) **EP 4 614 951 A1**
(43) Date of publication of application: **10.09.2025**
(21) Application number: 23896197.3
(22) Date of filing: 13.09.2023
(51) Int. Cl.: H04L 69/08

(54) **DATA PROCESSING SYSTEM, METHOD AND CONNECTING DEVICE**

(30) Priority: 01.12.2022 CN 202211531954; 07.03.2023 CN 202310248707
(71) Applicant: Huawei Technologies Co., Ltd., Shenzhen, Guangdong 518129 (CN)
(72) Inventor: YOU, Jun, Shenzhen, Guangdong 518129 (CN); ZHANG, Qi, Shenzhen, Guangdong 518129 (CN); ZHAO, Jiawei, Shenzhen, Guangdong 518129 (CN); LIU, Yong, Shenzhen, Guangdong 518129 (CN); ZHANG, Jingfang, Shenzhen, Guangdong 518129 (CN)
(74) Representative: MERH-IP Matias Erny Reichl Hoffmann Patentanwälte PartG mbB
(86) International application number: PCT/CN2023/118448
(87) International publication number: WO 2024/114040

(57) **Abstract**

A data processing system and method, and a connection device are provided, to adapt an ultra-low latency communication protocol (such as a CXL protocol or a UB protocol) to an RDMA protocol. In this application, the data processing system includes a first computing cluster, a second computing cluster, and a connection device. The first computing cluster includes a first computing device, and the second computing cluster includes a second computing device. Further, the connection device is connected to the first computing device, and the connection device is configured to manage memory address information of the first computing cluster that is provided by the first computing device and memory address information of the second computing cluster that is provided by the second computing device. The first computing device is configured to: receive an access request, where the access request is used to access memory space of the second computing device; search the memory address information of the second computing cluster that is managed by the connection device for an address of the memory space; and access the memory space of the second computing device based on the address.

## Description

### CROSS-REFERENCE TO RELATED APPLICATIONS

This application claims priorities to Chinese Patent Application No. 202211531954.6, filed with the China National Intellectual Property Administration on December 1, 2022 and entitled "MEMORY MANAGEMENT METHOD", and to Chinese Patent Application No. 202310248707.3, filed with the China National Intellectual Property Administration on March 7, 2023 and entitled "DATA PROCESSING SYSTEM AND METHOD, AND CONNECTION DEVICE", both of which are incorporated herein by reference in their entireties.

### TECHNICAL FIELD

This application relates to the field of computing technologies, and in particular, to a data processing system and method, and a connection device.

### BACKGROUND

Remote direct memory access (remote direct memory access, RDMA) is conceptually relative to direct memory access (direct memory access, DMA). In a DMA technology, an external device (that is, a peripheral component interconnect express (peripheral component interconnect express, PCIe) device) can directly access a memory of a host without using a central processing unit (central processing unit, CPU). In an RDMA technology, an external device may further access a memory of another remote host without using a CPU.

With the advent of the big data era, a data center needs not only to face massive data and users, but also to provide ultra-fast data communication services for users. An emerging ultra-low latency communication (such as compute express link (compute express link, CXL)) protocol brings new possibilities to data communication. The ultra-low latency communication protocol can implement high-speed and efficient interconnection between a CPU and a graphics processing unit (graphics processing unit, GPU), a CPU and a field programmable gate array (field programmable gate array, FPGA), or a CPU and another accelerator.

However, how to adapt the ultra-low latency communication protocol to the RDMA protocol is a technical problem that urgently needs to be resolved currently.

### SUMMARY

This application provides a data processing system and method, and a connection device, to adapt an ultra-low latency communication protocol (such as a CXL protocol or a unified bus (unified bus, UB) protocol) to an RDMA protocol.

According to a first aspect, this application provides a data processing system. The data processing system includes a first computing cluster, a second computing cluster, and a connection device. The first computing cluster includes a first computing device, and the second computing cluster includes a second computing device. Further, the connection device is connected to the first computing device, and the connection device is configured to manage memory address information of the first computing cluster that is provided by the first computing device and memory address information of the second computing cluster that is provided by the second computing device. The first computing device is configured to: receive an access request, where the access request is used to access memory space of the second computing device; search the memory address information of the second computing cluster that is managed by the connection device for an address of the memory space; and access the memory space of the second computing device based on the address. In a possible implementation, the data processing system further includes a network device. The network device is configured to connect the first computing cluster to the second computing cluster, and the network device is, for example, an RDMA network interface controller (RDMA network interface controller, RNIC). In a possible implementation, the connection device is connected to the first computing device by using an ultra-low latency communication protocol (for example, a CXL protocol or a UB protocol).

In the foregoing technical solution, the connection device manages memory address information that is provided by each of a plurality of computing devices and that is of a computing cluster to which the computing device belongs. When a computing device connected to the connection device needs to access memory space of a computing device in another computing cluster across computing clusters, the computing device may first search the connection device for an address used to access the memory space of the computing device in the another computing cluster, and then access the memory space based on the address. In this way, RDMA protocol-based access across computing clusters is adapted to ultra-low latency communication protocol-based access in a computing cluster.

In a possible implementation, the first computing cluster further includes a third computing device, and the connection device is configured to connect the first computing device to the third computing device. The first computing device is further configured to: obtain memory address information of the third computing device; perform addressing based on the memory address information of the third computing device and memory address information of the first computing device, to form the memory address information of the first computing cluster; and send the memory address information of the first computing cluster to the connection device.

In the foregoing technical solution, the first computing device can obtain memory address information of another computing device in the first computing cluster to which the first computing device belongs, and perform addressing based on the memory address information of the another computing device in the first computing cluster to which the first computing device belongs and the memory address information of the first computing device, to form the memory address information of the first computing cluster from a perspective of the first computing device. In this way, the first computing device may access memory space in the first computing cluster based on the ultra-low latency communication protocol. This helps improve an access speed, in other words, reduce access latency.

In a possible implementation, the memory address information of the first computing device includes information about a plurality of memories of the first computing device, and the memory address information of the third computing device includes information about a plurality of memories of the third computing device. In the foregoing technical solution, each computing device may include a plurality of types of memories. This helps improve memory access flexibility.

In a possible implementation, the connection device is further configured to: receive the memory address information of the first computing cluster from the first computing device; and/or receive the memory address information of the second computing cluster from the second computing device. In the foregoing technical solution, the connection device may receive memory address information that is from a computing device and that is of a computing cluster to which the computing device belongs, to uniformly manage memory address information from a plurality of computing devices, implementing that a computing device connected to the connection device accesses memory space of a computing device in another computing cluster across computing clusters.

In a possible implementation, the memory address information of the first computing cluster that is provided by the first computing device is specifically obtained by the first computing device by performing addressing on a memory of the first computing cluster at an operating system layer, and the memory address information of the second computing cluster that is provided by the second computing device is specifically obtained by the second computing device by performing addressing on a memory of the second computing cluster at an operating system layer. Further, the connection device is further configured to perform further addressing on a sum of the memory of the first computing cluster and the memory of the second computing cluster at an application layer, to obtain memory address information of the application layer, and establish a mapping relationship between the memory address information of the application layer and memory address information of each computing device at the operating system layer. In this way, the data processing system may provide lengths of memories of a plurality of computing clusters together for an application, so that the application can access any memory space in the plurality of computing clusters, improving application access flexibility.

In a possible implementation, the access request received by the first computing device specifically includes a first address delivered by the application. When the first computing device searches the memory address information of the second computing cluster that is managed by the connection device for the address of the memory space, the first computing device is specifically configured to send a query request to the connection device, where the query request includes the first address. Correspondingly, the first computing device receives a query response from the connection device, and the query response includes a second address, where the second address is determined by the connection device based on a mapping relationship between the memory address information of the application layer and the memory address information of the second computing cluster that is obtained by the second computing device through addressing at the operating system layer, and the first address.

In a possible implementation, the first computing device is further configured to determine that the first address that the access request used to access is not in the first computing cluster, that is, determine that the first address does not belong to a memory address in the first computing cluster. For example, the first computing device obtains, from the connection device, memory address information that corresponds to the first computing cluster and that is of the application layer, and determines, based on the first address and the memory address information that corresponds to the first computing cluster and that is of the application layer, that the first address does not belong to the memory address in the first computing cluster. Further, the first computing device further determines that the first address is a memory address of the second computing device that belongs to the second computing cluster, that is, determines that the access request is an access request used to access the memory space of the second computing device.

In addition, in another possible implementation, the first computing device is further configured to determine that the first address is in the first computing cluster, that is, determine that the first address belongs to the memory address in the first computing cluster, and then access, in the first computing cluster, memory space indicated by the first address. For example, the first computing device obtains, from the connection device, the memory address information that corresponds to the first computing cluster and that is of the application layer, and determines, based on the first address and the memory address information that corresponds to the first computing cluster and that is of the application layer, that the first address belongs to the memory address in the first computing cluster.

According to a second aspect, this application provides a connection device. The apparatus includes: a transceiver module, configured to receive a query request sent by a first computing device, where the query request is used to query an address that an access request used to access address space of a second computing device in a second computing cluster is used to access; and a management module, configured to send the queried address to the first computing device based on the query request and memory address information of the second computing cluster by using the transceiver module, where the connection device is connected to the first computing device in a first computing cluster, and the management module is configured to manage memory address information of the first computing cluster that is provided by the first computing device and the memory address information of the second computing cluster that is provided by the second computing device.

In a possible implementation, the transceiver module is further configured to: receive the memory address information of the first computing cluster from the first computing device; and/or receive the memory address information of the second computing cluster from the second computing device.

According to a third aspect, this application provides a computing device. The computing device is specifically a first computing device. The computing device includes: a transceiver module, configured to receive an access request, where the access request is used to access memory space of a second computing device, the first computing device is located in a first computing cluster, and the second computing device is located in a second computing cluster; a search module, configured to search a connection device for an address of the memory space; and an access module, configured to access the memory space of the second computing device based on the address, where the connection device is connected to the first computing device, and the connection device is configured to manage memory address information of the first computing cluster that is provided by the first computing device and memory address information of the second computing cluster that is provided by the second computing device.

In a possible implementation, the first computing cluster is connected to the second computing cluster by using a network device.

In a possible implementation, the connection device is connected to the first computing device by using a CXL protocol or a UB protocol.

In a possible implementation, the first computing cluster further includes a third computing device, and the connection device is configured to connect the first computing device to the third computing device. A processing module is further configured to: obtain memory address information of the third computing device; and perform addressing based on the memory address information of the third computing device and memory address information of the first computing device, to form the memory address information of the first computing cluster. The transceiver module is further configured to send the memory address information of the first computing cluster to the connection device.

In a possible implementation, the memory address information of the first computing device includes information about a plurality of memories of the first computing device, and the memory address information of the third computing device includes information about a plurality of memories of the third computing device.

In a possible implementation, the processing module is further configured to: after the transceiver module receives the access request, determine, based on an address (that is, a first address) that the access request is used to access not belonging to a memory address of the first computing cluster, that the access request is an access request used to access the memory space of the second computing device.

According to a fourth aspect, this application provides a data processing method, including: A first computing device receives an access request, where the access request is used to access memory space of a second computing device in a second computing cluster; and sends a query request to a connection device, where the query request is used to query an address that the access request used to access address space of the second computing device is used to access, and the first computing device is located in a first computing cluster. The connection device receives the query request, and sends the queried address to the first computing device based on the query request and memory address information of the second computing cluster. The first computing device accesses the memory space of the second computing device based on the received address.

In a possible implementation, the connection device further manages memory address information of the first computing cluster that is provided by the first computing device and the memory address information of the second computing cluster that is provided by the second computing device.

In a possible implementation, the connection device is connected to the first computing device by using a CXL protocol or a UB protocol.

In a possible implementation, the first computing cluster further includes a third computing device, and the connection device is configured to connect the first computing device to the third computing device. The first computing device further obtains memory address information of the third computing device. The first computing device performs addressing based on the memory address information of the third computing device and memory address information of the first computing device, to form memory address information of the first computing cluster. The first computing device sends the memory address information of the first computing cluster to the connection device.

In a possible implementation, the memory address information of the first computing device includes information about a plurality of memories of the first computing device, and the memory address information of the third computing device includes information about a plurality of memories of the third computing device.

In a possible implementation, after receiving the access request, the first computing device further determines, based on an address that the access request is used to access not belonging to a memory address of the first computing cluster, that the access request is an access request used to access the memory space of the second computing device.

In a possible implementation, the connection device further receives the memory address information of the first computing cluster from the first computing device; and/or receives the memory address information of the second computing cluster from the second computing device.

According to a fifth aspect, this application provides a computer-readable storage medium. The computer-readable storage medium stores a computer program or instructions. When the computer program or the instructions are executed by a device, the method in any possible implementation of the fourth aspect is implemented.

According to a sixth aspect, this application provides a computer program product. The computer program product includes a computer program or instructions. When the computer program or the instructions are executed by a device, the method in any possible implementation of the fourth aspect is implemented.

According to a seventh aspect, this application provides a device, including a processor. The processor is connected to a storage. The storage is configured to store a computer program. The processor is configured to execute the computer program stored in the storage, so that the device implements the method in any possible implementation of the fourth aspect.

For technical effects that can be achieved in any one of the second aspect to the seventh aspect, refer to the descriptions of beneficial effects in the first aspect. Details are not described herein again.

### BRIEF DESCRIPTION OF DRAWINGS

FIG. 1 is a diagram of transmitting data by a host to a device by using a PCIe protocol according to this application;
FIG. 2 is a diagram of a structure of a data processing system according to this application;
FIG. 3 is a diagram of a memory pool of a data processing system according to this application;
FIG. 4 is a schematic flowchart of a data processing method according to this application;
FIG. 5 is a diagram of a ring synchronization manner according to this application;
FIG. 6 is a schematic flowchart of another data processing method according to this application; and
FIG. 7 is a diagram of a structure of a data processing apparatus according to this application.

### DESCRIPTION OF EMBODIMENTS

The following describes in detail embodiments of this application with reference to the accompanying drawings.

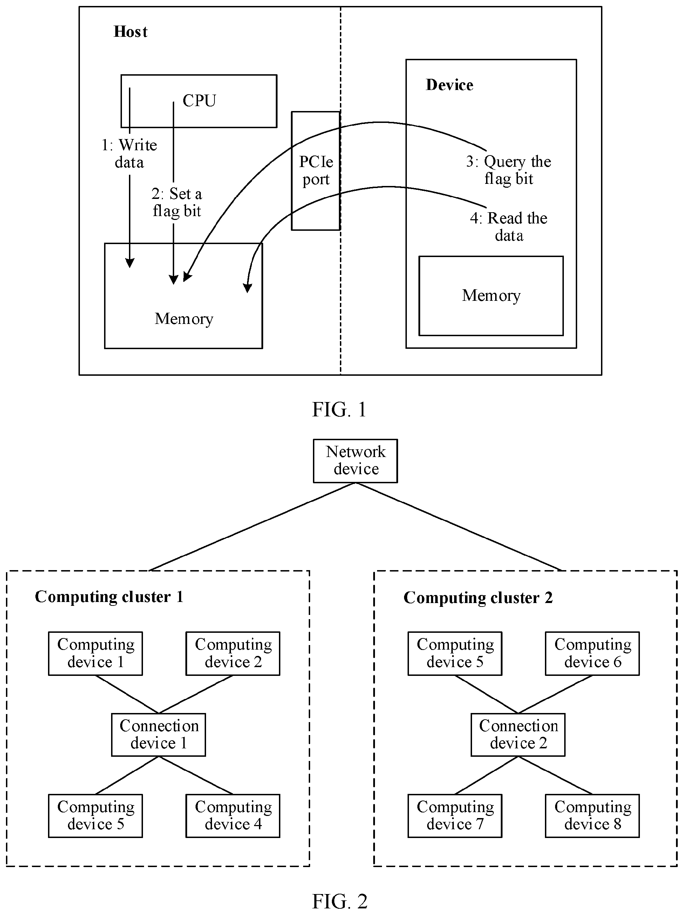

For ease of explaining embodiments of this application, terms and technologies in embodiments of this application are first explained.
1. A peripheral component interconnect express (peripheral component interconnect express, PCIe) protocol is used for high-speed serial point-to-point dual-channel high-bandwidth transmission. For example, FIG. 1 is a diagram of transmitting data by a host (host) to a device (device) by using a PCIe protocol. Specifically, a central processing unit (central processing unit, CPU) in the host needs to first write the data into a local memory (memory) of the host, and then set a flag bit, where the flag bit is used to notify the device that the host has written the data into the local memory of the host. Correspondingly, the device queries the flag bit, and determines, based on the flag bit, that the host has written the data into the local memory of the host, so that the device reads the data from the local memory of the host, and stores the read data into a local memory of the device. A manner in which the device transmits data to the host by using the PCIe protocol is similar to the foregoing manner in which the host transmits the data to the device by using the PCIe protocol. Details are not described again.
2. Compute express link (compute express link, CXL) protocol: The CXL protocol is a new protocol based on a PCIe protocol and for cache (cache) optimization and memory optimization. The CXL protocol runs at a PCIe physical layer.

The CXL protocol may be classified into the following three types.

A CXL.io protocol is an enumeration configuration protocol, and is mainly used for device discovery, device enumeration, error reporting, and the like.

A CXL.cache protocol enables a device to resolve memory consistency, to access a host memory with low latency. Specifically, the CXL.cache protocol mainly provides a capability of quickly accessing the host memory by maintaining cache consistency on a device side. The protocol allows the device to participate in a consistency cache protocol of a CPU in a host. The device may alternatively directly use the host memory and a local cache of the host. The host may also obtain data from a cache of the device, and does not use the memory as an intermediate medium.

A CXL.mem protocol is used to enable a host to access a device memory in a same way as accessing a local memory of the host. In the CXL.mem protocol, a CPU is configured to send a request to a device, and the device is configured to return a response to the CPU. The request sent by the CPU is classified into a request with data and a request without data. Accordingly, the response returned by the device is classified into a response with data and a response without data.

3. A unified bus (unified bus, UB) protocol is a Huawei-developed ultra-low latency communication protocol, and is used to provide high-performance interconnection between data centers, enabling the data centers to be interconnected like a computer.

4. Memory pool (memory pool): A program may apply for a large memory block from a system in advance to form a memory pool. Then, memory allocation and release of the program are performed in the memory pool. When the memory pool is insufficient, the program applies for a new memory from the system.

5. A load (load)/store (store) instruction is an ARM (advanced risc machine) instruction and is used to transfer data between a register and a memory. Specifically, the load instruction is used to load data in the memory to the register, and the store instruction is used to store data in the register to the memory. Because another ARM instruction can be for operating only the register, when data needs to be operated by using the another ARM instruction, the data needs to be first loaded from the memory to the register by using the load instruction. Correspondingly, data that is completed according to the another ARM instruction needs to be stored from the register to the memory by using the store instruction.

With reference to the explanations of the foregoing terms and technologies, FIG. 2 is an example of a diagram of a structure of a data processing system according to this application.

The data processing system includes a plurality of computing clusters. Using any computing cluster as an example. The computing cluster includes a plurality of computing devices (computer nodes), and each computing device is connected to a connection device. In other words, the connection device is configured to connect any two computing devices in the plurality of computing devices, and the two computing devices communicate with each other based on an ultra-low latency communication protocol. It may be considered that each computing cluster corresponds to a respective connection device, and a connection device corresponding to a computing cluster is located in the computing cluster, or a connection device corresponding to a computing cluster is located outside the computing cluster. The ultra-low latency communication protocol is, for example, a CXL protocol or a UB protocol. Alternatively, it may be understood that any computing device located in a computing cluster may sense, based on the ultra-low latency communication protocol, a memory of another computing device in the computing cluster to which the computing device belongs, and perform addressing on memories of all computing devices in the computing cluster to which the computing device belongs.

Networking of the plurality of computing clusters is further implemented by using an RDMA protocol, and any two computing clusters are connected by using a network device, where the network device is, for example, an RDMA network interface controller (RDMA network interface controller, RNIC). That is, the network device is configured to connect any two computing clusters in the plurality of computing clusters. For example, two computing devices located in two different computing clusters each include an RNIC, and the two RNICs may communicate with each other based on the RDMA protocol, that is, communication between the computing clusters to which the two computing devices belong is implemented.

FIG. 2 shows an example of a computing cluster 1 and a computing cluster 2, and the computing cluster 1 is connected to the computing cluster 2 by using a network device. Further, the computing cluster 1 includes a computing device 1 to a computing device 4 and a connection device 1, where the connection device 1 is configured to connect any two computing devices in the computing device 1 to the computing device 4. The computing cluster 2 includes a computing device 5 to a computing device 8 and a connection device 2, where the connection device 2 is configured to connect any two computing devices in the computing device 5 to the computing device 8. It may be understood that a quantity of computing clusters, a quantity of computing devices in each computing cluster, and a location relationship between a connection device and a computing cluster in FIG. 2 do not constitute a limitation on the structure of the data processing system in this application.

In the data processing system, memories of the plurality of computing devices may form a memory pool (memory pool). With reference to the example in FIG. 2, networking of the data processing system includes the computing device 1 to the computing device 8. The computing device 1 to the computing device 8 respectively include a memory 1 to a memory 8. Correspondingly, the memory 1 to the memory 8 form a memory pool.

Further, using any computing device as an example. The computing device includes one or more processors. The processor is, for example, a CPU, a GPU, a neural-network accelerator (neural-network processing unit, NPU), or an FPGA. For any processor in the computing device, the memory pool may include memories in one or more memory forms.

Based on an access speed from fast to slow, for example, the following provides four memory forms.
(1) Device attached memory (device attached memory, DAM): For a CUP, the device attached memory is, for example, a double data rate synchronous dynamic random access memory (double data rate synchronous dynamic random access memory, DDR SDRAM) linked to the CPU; for a GPU, the device attached memory is, for example, a high bandwidth memory (high bandwidth memory, HBM) on the GPU; and for an NPU, the device attached memory is, for example, an HBM and a DDR on the NPU. For example, access latency of the device attached memory is less than 100 ns.
(2) Device local memory (device local memory, DLM): For a GPU, the device local memory is a host memory (host memory) in a computing device to which the GPU belongs; and for a CPU, the device local memory is an expanded memory (expanded memory) in a computing device to which the CPU belongs. For example, access latency of the device local memory ranges from 100 ns to 300 nm.
(3) A small network memory (small network memory, SNM) is a memory in the computing cluster. With reference to FIG. 2, for example, the computing device 1 and the computing device 2 are located in the computing cluster 1, and for a CPU in the computing device 1, a memory 2 in the computing device 2 is a small network memory of the CPU in the computing device 1. For example, access latency of the SNM ranges from 300 ns to 600 nm.
(4) A large network memory (large network memory, LNM) is a memory across computing clusters. With reference to FIG. 2, for example, the computing device 1 is located in the computing cluster 1, the computing device 5 is located in the computing cluster 2, and for a CPU in the computing device 1, a memory 5 in the computing device 5 is an LNM of the CPU in the computing device 1. For example, access latency of the SNM is greater than 600 nm.

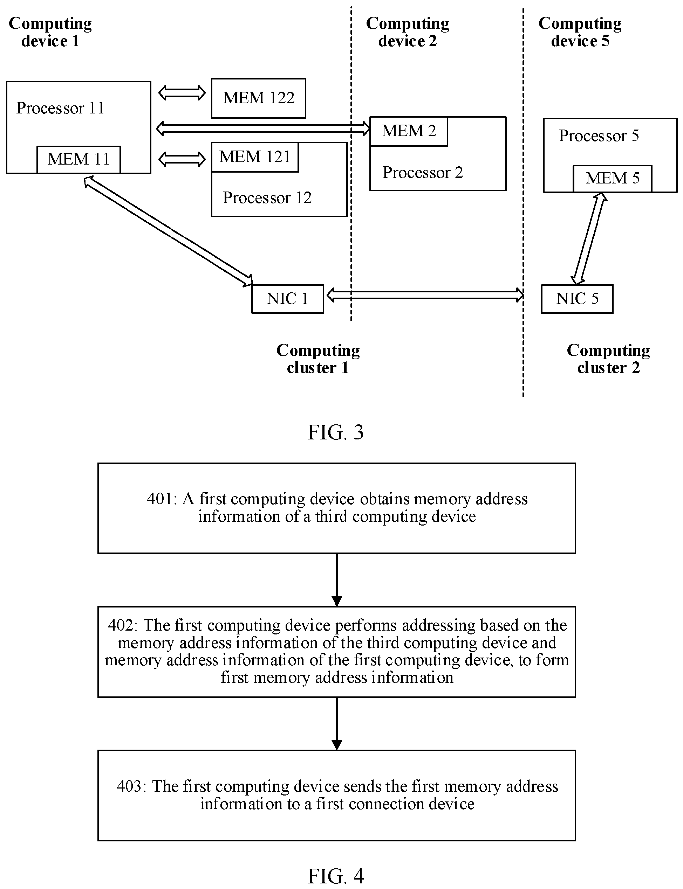

With reference to FIG. 2, FIG. 3 is an example of a diagram of a memory pool of a data processing system according to this application. A computing device 1 includes a processor 11 and a processor 12, a computing device 2 includes a processor 2, and a computing device 5 includes a processor 5. Further, the computing device 1 further includes a device attached memory (denoted as a MEM 11) of the processor 11, a device attached memory (denoted as a MEM 121) of the processor 12, and an expanded memory (denoted as a MEM 122) of the processor 12. The computing device 2 further includes a device attached memory (denoted as a MEM 2) of the processor 2. The computing device 5 further includes a device attached memory (denoted as a MEM 5) of the processor 5. From a perspective of the processor 11, the MEM 11 is a device attached memory; both the MEM 121 and the MEM 122 are device local memories; the MEM 2 is a small network memory; and the MEM 5 is a large network memory. The processor 11 may access the MEM 2 based on an ultra-low latency communication protocol, and access the MEM 5 by using RDMA. When accessing the MEM 5 based on the RDMA, the processor 11 may specifically access the MEM 5 based on an RNIC 1 in the computing device 1 and an RNIC 5 in the computing device 5 (for a specific implementation, refer to descriptions in the following step 606).

With reference to FIG. 2 and FIG. 3, this application provides a data processing method. The data processing method is specifically an addressing method. The addressing method may be performed by a first connection device corresponding to a first computing cluster. The first connection device may uniformly manage memory address information of the first computing cluster and memory address information of a second computing cluster, so that the first computing device in the first computing cluster accesses a second computing device in the second computing cluster.

For example, the first computing cluster may be the computing cluster 1 in FIG. 2, and the second computing cluster may be the computing cluster 2 in FIG. 2. Correspondingly, the first computing device may be any one of the computing device 1 to the computing device 4, and the second computing device may be any one of the computing device 5 to the computing device 8.

Alternatively, in the data processing method, the first computing cluster may be the computing cluster 2 in FIG. 2, and the second computing cluster may be the computing cluster 1 in FIG. 2. Correspondingly, the first computing device may be any one of the computing device 5 to the computing device 8, and the second computing device may be any one of the computing device 1 to the computing device 4.

FIG. 4 is a schematic flowchart of a data processing method according to this application.

Step 401: A first computing device obtains memory address information of a third computing device.

The third computing device is a computing device other than a first computing device in a first computing cluster. With reference to the example in FIG. 2, the first computing cluster is the computing cluster 1, the first computing device is the computing device 1, and the third computing device is the computing device 2. The first computing device is connected to the third computing device by using a first connection device.

The third computing device may include a plurality of memories. For example, the third computing device includes a DDR SDRAM linked to a CPU, an HBM on a GPU, and an expanded memory. The memory address information of the third computing device may be specifically information about the plurality of memories, for example, a size and a category of each memory in the plurality of memories.

Step 402: The first computing device performs addressing based on the memory address information of the third computing device and memory address information of the first computing device, to form memory address information (denoted as first memory address information) of the first computing cluster.

The first computing device may include a plurality of memories. For example, the first computing device includes a DDR SDRAM linked to a CPU, an HBM on a GPU, and an expanded memory. The memory address information of the first computing device may be specifically information about the plurality of memories, for example, sizes and categories of the plurality of memories.

Specifically, the first computing device performs addressing based on memory address information (including the memory address information of the third computing device and the memory address information of the first computing device) of all computing devices in the first computing cluster, to form the memory address information (that is, the first memory address information) of the first computing cluster from a perspective of the first computing device. With reference to FIG. 2, for example, the first computing cluster is the computing device 1, and the computing device 1 may obtain memory address information of the computing device 1 to the computing device 4, and perform addressing based on the memory address information of the computing device 1 to the computing device 4. For example, each of the computing device 1 to the computing device 4 has 25G memory, that is, the computing cluster 1 has 100G memory in total. In this case, the computing device 1 may perform addressing on the 100G memory from a perspective of the first computing device.

It may also be understood that, because computing devices in the first computing cluster are connected to each other based on an ultra-low latency communication protocol, the first computing device may sense memories of computing devices other than the first computing device in the first computing cluster, and then perform addressing on memories of all computing devices in the first computing cluster, to obtain the first memory address information. Further, another computing device (for example, the third computing device) in the first computing cluster may also sense memories of computing devices other than the another computing device in the first computing cluster, and then perform addressing on the memories of all the computing devices in the first computing cluster, to obtain memory address information of the first computing cluster from a perspective of the another computing device.

It should be noted that, the two computing devices perform addressing from their respective perspectives, and memory address information of the first computing cluster obtained by the two computing devices through addressing is different. With reference to FIG. 2, for example, the computing device 1 may consider that address numbers of local 25G memory of the computing device 1 are 1G to 25G, and consider that address numbers of local 25G memory of the computing device 2 are 26G to 50G. The computing device 2 may consider that the address numbers of the local 25G memory of the computing device 2 are 1^{st} G to 25^{th} G, and consider that the address numbers of the local 25G memory of the computing device 1 are 26^{th} G to 50^{th} G.

Step 403: The first computing device sends the first memory address information to the first connection device. Correspondingly, the first connection device receives the first memory address information from the first computing device.

In addition, after addressing, another computing device in the first computing cluster also sends, to the first connection device, memory address information of the first computing cluster that is obtained through addressing by the another computing device. Correspondingly, the first connection device may store memory address information of the first computing cluster that is from each computing device in the first computing cluster and that is obtained through addressing from a perspective of the computing device. With reference to FIG. 2, for example, pieces of memory address information of the first computing cluster that are respectively obtained through addressing by the computing device 1 to the computing device 4 are recorded as memory address information 1 to memory address information 4. Correspondingly, the first connection device records the memory address information 1 to the memory address information 4. In this application, pieces of memory address information of the first computing cluster that are recorded in the first connection device and that are obtained from perspectives of computing devices in the first computing cluster may be referred to as a memory address information set of the first computing cluster.

Similarly, each computing device in a second computing cluster may also perform addressing on addresses of all computing devices in the second computing cluster, to obtain pieces of memory address information of the second computing cluster that are obtained from perspectives of the computing devices in the second computing cluster. Correspondingly, a second connection device records the pieces of memory address information of the second computing cluster that are obtained from the perspectives of the computing devices in the second computing cluster. For a specific implementation, refer to the descriptions of step 401 to step 403. With reference to FIG. 2, for example, pieces of memory address information of the second computing cluster that are respectively obtained through addressing by the computing device 5 to the computing device 8 are recorded as memory address information 5 to memory address information 8. Correspondingly, the second connection device records the memory address information 5 to the memory address information 8. In this application, pieces of memory address information of the second computing cluster that are recorded in the second connection device and that are obtained from perspectives of computing devices in the second computing cluster may be referred to as a memory address information set of the second computing cluster.

Further, the first connection device may further obtain the memory address information set that is of the second computing cluster and that is recorded in the second connection device. In an example, the first connection device is directly connected to the second connection device, and the first connection device may directly synchronize, from the second connection device, the memory address information set that is of the second computing cluster and that is recorded in the second connection device. In another example, the first connection device is connected to the first computing device, the second connection device is connected to the second computing device, and the first computing device is connected to the second computing device by using a network device (for example, an RNIC). For example, the second connection device first synchronizes the memory address information set of the second computing cluster to the second computing device based on an ultra-low latency communication protocol, then, the second computing device synchronizes the memory address information set of the second computing cluster to the first computing device based on an RDMA protocol, and next, the first computing device synchronizes the memory address information set of the second computing cluster to the first connection device based on an ultra-low latency communication protocol. With reference to FIG. 2, for example, the first connection device may obtain the memory address information 5 to the memory address information 8 that are recorded in the second connection device, that is, the first connection device can manage the memory address information 1 to the memory address information 8.

In addition, each computing device in the second computing cluster may alternatively synchronize memory address information of the computing device to the first connection device by using the RDMA protocol. With reference to FIG. 2, for example, the computing device 5 synchronizes the memory address information 5 to the first connection device, the computing device 6 synchronizes the memory address information 6 to the first connection device, the computing device 7 synchronizes the memory address information 7 to the first connection device, and the computing device 8 synchronizes the memory address information 8 to the first connection device. In this way, the first connection device can manage the memory address information 1 to the memory address information 8.

It should be noted that, in the foregoing embodiment related to FIG. 4, when the first computing device performs addressing on the first computing cluster, specifically, the first computing device performs addressing on a memory of the first computing cluster at an operating system layer (or a hardware layer). Further, the first connection device may further perform addressing on a sum of memory of a plurality of computing clusters in an entire data processing system, to obtain memory address information of an application layer. Then, the first connection device establishes a mapping relationship between the memory address information of the application layer and memory address information of each computing device at the operating system layer.

With reference to the example in FIG. 2, Table 1 shows an example of a mapping relationship managed by the first connection device according to this application. Each of an address 1 to an address n+m corresponds to a same address length, and the address length is, for example, 4 KB or 8 KB. The computing cluster 1 corresponds to an address 1 to an address n at the application layer, that is, a length from the address 1 to the address n at the application layer is 100G, where n is a positive integer, and n is specifically a ratio of 100G to the address length. The computing cluster 2 corresponds to an address n+1 to an address n+m at the application layer, that is, a length from the address n+1 to the address n+m at the application layer is 100G, where m is a positive integer, and m is specifically a ratio of 100G to the address length.

Further, from perspectives of different computing devices, addresses at a same application layer correspond to different operating system layer addresses. For example, the address 1 at the application layer corresponds to an address 1-1 in the computing device 1, corresponds to an address 2-1 in the computing device 2, corresponds to an address 3-1 in the computing device 3, and corresponds to an address 4-1 in the computing device 4. For another example, the address n+1 at the application layer corresponds to an address 5-1 in the computing device 5, corresponds to an address 6-1 in the computing device 6, corresponds to an address 7-1 in the computing device 7, and corresponds to an address 8-1 in the computing device 8.

**Table 1**

| Address at an application layer | Computing device 1 | Computing device 2 | Computing device 3 | Computing device 4 |
|---|---|---|---|---|
| Address 1 | Address 1-1 | Address 2-1 | Address 3-1 | Address 4-1 |
| Address 2 | Address 1-2 | Address 2-2 | Address 3-2 | Address 4-2 |
| Address 3 | Address 1-3 | Address 2-3 | Address 3-3 | Address 4-3 |
| Address 4 | Address 1-4 | Address 2-4 | Address 3-4 | Address 4-4 |
| Address 5 | Address 1-5 | Address 2-5 | Address 3-5 | Address 4-5 |
| ... | ... | ... | ... | ... |
| Address n | Address 1-n | Address 2-n | Address 3-n | Address 4-n |
| | | | | |

| | Computing device 5 | Computing device 6 | Computing device 7 | Computing device 8 |
|---|---|---|---|---|
| Address n+1 | Address 5-1 | Address 6-1 | Address 7-1 | Address 8-1 |
| Address n+2 | Address 5-2 | Address 6-2 | Address 7-2 | Address 8-2 |
| Address n+3 | Address 5-3 | Address 6-3 | Address 7-3 | Address 8-3 |
| Address n+4 | Address 5-4 | Address 6-4 | Address 7-4 | Address 8-4 |
| Address n+5 | Address 5-5 | Address 6-5 | Address 7-5 | Address 8-5 |
| ... | ... | ... | ... | ... |
| Address n+m | Address 5-m | Address 6-m | Address 7-m | Address 8-m |

Further, the first connection device may send, to the first computing device, a plurality of addresses at the application layer that are corresponding to the first computing cluster and a length of each address, for example, send a total of n addresses from the address 1 to the address n and a length (for example, 4 KB) of each address to the first computing device. Alternatively, the first connection device may send, to the first computing device, a start address at the application layer that is corresponding to the first computing cluster and a total length, for example, send the address 1 and 100G to the first computing device. In addition, the first connection device may further send, to the first computing device, a plurality of addresses at the application layer that are corresponding to the second computing cluster and a length of each address, or send, to the first computing device, a start address at the application layer that is corresponding to the second computing cluster and a total length. In this application, information sent by the first connection device to the first computing device is collectively referred to as first information. Correspondingly, the first computing device may determine, based on the first information from the first connection device, whether memory space indicated by an address to be accessed by an application is located in the first computing cluster (for a specific implementation, refer to descriptions in the following step 602).

Similarly, the second connection device may further obtain the pieces of memory address information of the first computing cluster that are recorded in the first connection device and that are from perspectives of computing devices in the first computing cluster, and perform addressing on the sum of the memory of the plurality of computing clusters in the entire data processing system, to obtain the memory address information of the application layer. The memory address information of the application layer may be used by an application running on the computing device in the second computing cluster to access the entire data processing system. In addition, the second connection device further sends, to the first computing device, the plurality of addresses at the application layer that are corresponding to the second computing cluster and the length of each address, or sends, to the second computing device, the start address at the application layer that is corresponding to the second computing cluster and the total length. A specific implementation is similar to that of the first connection device. Details are not described again.

It should be added that the data processing system in this application may include K computing clusters, where K is a positive integer. For one computing cluster, a connection device corresponding to the computing cluster may record a memory address information set of the computing cluster. To enable a connection device corresponding to each computing cluster to obtain memory address information sets of connection devices of all other computing clusters, this application provides a ring synchronization manner. To be specific, K connection devices corresponding to the K computing clusters may form a plurality of ring structures, and each ring structure includes a plurality of connection devices that can communicate with each other based on an ultra-low latency communication protocol. In this way, the plurality of connection devices in the ring structure may exchange respective memory address information sets based on the ultra-low latency communication protocol. Subsequently, each of the plurality of ring structures further provides a connection device, that is, connection devices provided by the plurality of ring structures further form a new ring structure based on an RDMA protocol. The plurality of connection devices in the new ring structure may exchange, based on the RDMA protocol, memory address information sets of ring structures in which the plurality of connection devices are located.

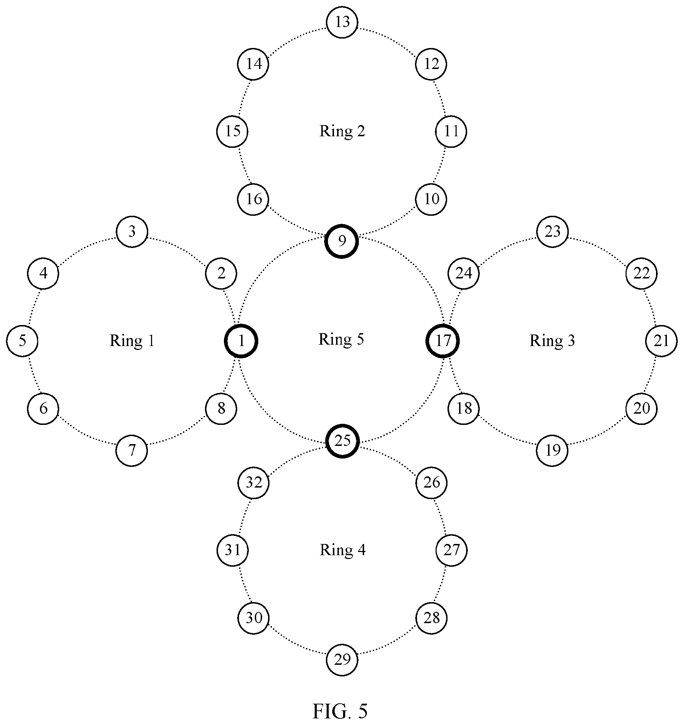

FIG. 5 is an example of a diagram of a ring synchronization manner according to this application. A thin solid line circle refers to a connection device, and a thick solid line circle refers to a network device. A connection device 1 to a connection device 8 form a ring 1, a connection device 9 to a connection device 16 form a ring 2, a connection device 17 to a connection device 24 form a ring 3, a connection device 25 to a connection device 32 form a ring 4, and the connection device 1, the connection device 9, the connection device 17, and the connection device 25 form a ring 5. For ease of description, memory address information sets of computing clusters corresponding to the connection device 1 to the connection device 32 are respectively denoted as a memory address information set 1 to a memory address information set 32.

Using the ring 1 as an example to describe ring transmission.

### In 1^{st} ring transmission:

The connection device 1 sends the memory address information set 1 to the connection device 2, the connection device 2 sends the memory address information set 2 to the connection device 3, ..., the connection device 7 sends the memory address information set 7 to the connection device 8, and the connection device 8 sends the memory address information set 8 to the connection device 1.

### In 2^{nd} ring transmission:

The connection device 1 sends the memory address information set 8 to the connection device 2, the connection device 2 sends the memory address information set 1 to the connection device 3, ..., the connection device 7 sends the memory address information set 6 to the connection device 8, and the connection device 8 sends the memory address information set 7 to the connection device 1.

By analogy, the memory address information set 1 to the memory address information set 8 may be obtained from each connection device from the connection device 1 to the connection device 8.

Similarly, in ring transmission corresponding to the ring 2, the memory address information set 9 to the memory address information set 16 may be obtained from each connection device from the connection device 9 to the connection device 16. In ring transmission corresponding to the ring 3, the memory address information set 17 to the memory address information set 24 may be obtained from each connection device from the connection device 17 to the connection device 24. In ring transmission corresponding to the ring 4, the memory address information set 25 to the memory address information set 32 may be obtained from each connection device from the connection device 25 to the connection device 32.

After the ring 1 to the ring 4 all complete ring transmission, the connection device 1, the connection device 9, the connection device 17, and the connection device 25 in the ring 5 further perform ring transmission (in a manner similar to that of the ring 1). In this way, the connection device 1, the connection device 9, the connection device 17, and the connection device 25 may all obtain the memory address information set 1 to the memory address information set 32. Then, the connection device 1 sends the memory address information set 1 to the memory address information set 32 to connection devices in the ring 1, the connection device 9 sends the memory address information set 1 to the memory address information set 32 to connection devices in the ring 2, the connection device 17 sends the memory address information set 1 to the memory address information set 32 to connection devices in the ring 3, and the connection device 25 sends the memory address information set 1 to the memory address information set 32 to connection devices in the ring 4.

In this way, a connection device corresponding to each computing cluster can manage not only a memory address information set of the computing cluster, but also a memory address information set of another computing cluster. When a computing device needs to access a computing device in a computing cluster other than a cluster to which the computing device belongs, the computing device may first query, from a connection device corresponding to the computing cluster to which the computing device belongs, an address that the computing device needs to access, and then perform access based on the queried address.

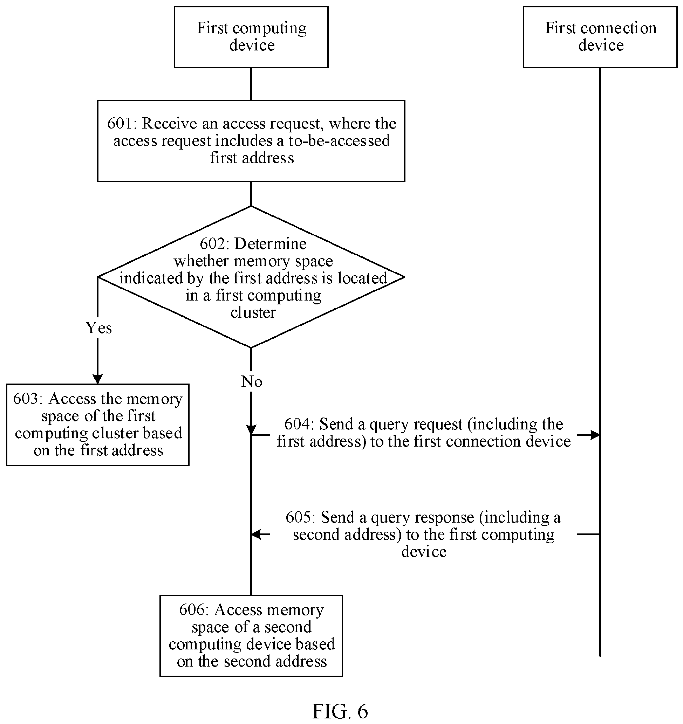

FIG. 6 is a schematic flowchart of an example of a data processing method according to this application. The data processing method is specifically a data access method in which a first computing device accesses memory space of a second computing device.

Step 601: The first computing device receives an access request, where the access request includes a to-be-accessed first address.

Step 602: The first computing device determines whether memory space indicated by the first address is located in a first computing cluster, and performs step 603 if the memory space indicated by the first address is located in the first computing cluster, or performs step 604 to step 606 if the memory space indicated by the first address is not located in the first computing cluster.

In a specific implementation, an application in the first computing device generates an access request based on memory address information of an application layer. The access request includes a first address to be accessed by the application, and the first address indicates address space in a computing cluster of a data processing system. With reference to the example in FIG. 2, if total memory of the computing cluster 1 is 100G, and total memory of the computing cluster 2 is 100G, total memory of the entire data processing system is 200G. The first computing device can provide 200G memory space for the application, that is, the application may access any segment of address space in the 200G.

In a possible implementation, the first computing device determines, based on first information, whether the memory space indicated by the first address is located in the first computing cluster. With reference to the example in Table 1, the first computing device is the computing device 1, and the first computing cluster is the computing cluster 1. When the first address is the address 1 at the application layer, the computing device 1 determines, based on the first information, that the memory space indicated by the first address is located in the computing cluster 1. When the first address is the address n+1 at the application layer, the computing device 1 determines, based on the first information, that the memory space indicated by the first address is not located in the computing cluster 1; and further, the first computing device may determine, based on the first information, that the memory space indicated by the first address is located in the computing cluster 2, that is, the computing cluster 2 is a second computing cluster.

Step 603: The first computing device accesses the memory space in the first computing cluster based on the first address.

The memory space indicated by the first address may be located in the first computing device, or may be located in a computing device other than the first computing device in the first computing cluster. With reference to the example in Table 1, the first computing device is the computing device 1, and the first computing cluster is the computing cluster 1. When the first address is the address 1 at the application layer, the computing device 1 may access the address 1-1 based on the address 1 at the application layer, where memory space indicated by the address 1-1 is located in the computing device 1; when the first address is the address n at the application layer, the computing device 1 may access the address 1-n based on the address n at the application layer, where memory space indicated by the address 1-n is located in the computing device 4; and so on.

The first computing device accesses, by using an ultra-low latency communication protocol, the memory space indicated by the first address. Specifically, when the access request is a write request, the access request further includes target data to be written into the first address, and the first computing device may store (store) the target data in the memory space indicated by the first address. When the access request is a read request, the first computing device may load (load) the target data from the memory space indicated by the first address.

Step 604: The first computing device sends a query request to a first connection device, and correspondingly, the first connection device receives the query request from the first computing device, where the query request includes the first address.

Step 605: The first connection device sends a query response to the first computing device, and correspondingly, the first computing device receives the query response from the first connection device, where the query response includes a second address.

Specifically, the first connection device determines, based on the first address in the query request and a mapping relationship between the memory address information of the application layer and memory address information of each computing device at an operating system layer, the second address corresponding to the first address, where the second address is used by the first computing device to access the second computing device.

With reference to the example in Table 1, when the first address is the address n+1 at the application layer, the computing device 1 sends a query request to the first connection device. The first connection device determines, based on the address n+1 at the application layer in the query request and the mapping relationship in Table 1, that the second address is specifically the address 5-1 from a perspective of the computing device 5, and therefore may send a query response to the computing device 1, where the query response includes an identifier of the computing device 5 and the address 5-1. Alternatively, the first connection device may further determine that the second address is specifically the address 6-1 from a perspective of the computing device 6, and therefore may send a query response to the computing device 1, where the query response includes an identifier of the computing device 6 and the address 6-1. It may be understood that the first connection device may determine, based on the first address, the second address corresponding to the first address from perspectives of a plurality of different computing devices. Further, the first connection device may select a computing device with low computing load, and send, to the first computing device, an identifier of the computing device with low computing load and a second address corresponding to the computing device.

Step 606: The first computing device accesses the memory space of the second computing device based on the second address.

Specifically, the first computing device accesses the second address in the second computing device based on an RDMA protocol.

When the access is a write request (that is, RDMA write), the access request further includes target data to be written into the first address. A CPU of the second computing device first registers the second address with an RNIC of the second computing device in advance, and obtains a local key (local key), where the local key indicates that RDMA may have permission to operate the second address. Further, the RNIC of the second computing device encapsulates the second address and the local key into a dedicated packet and transfers the dedicated packet to the first computing device, that is, the RNIC of the second computing device gives the operation permission of the second address to the first computing device. Correspondingly, after receiving the dedicated packet sent by the RNIC of the second computing device, an RNIC of the first computing device encapsulates the second address, the local key, and target data stored in the first computing device into RDMA write, and sends RDMA write to the second computing device. In this way, the first computing device may write the target data into the second address of the second computing device.

When the access is a read request (that is, RDMA read), a CPU of the second computing device first registers the second address with an RNIC of the second computing device in advance, and obtains a local key, where the local key indicates that RDMA may have permission to operate the second address. Further, the RNIC of the second computing device encapsulates the second address and the local key into a dedicated packet and transfers the dedicated packet to the first computing device, that is, the second computing device gives the operation permission of the second address to the first computing device. Correspondingly, after receiving the dedicated packet sent by the RNIC of the second computing device, an RNIC of the first computing device encapsulates, into RDMA read, a third address, the second address, and the local key that are locally used to store target data, and sends RDMA read to the second computing device. In this way, the first computing device may read the target data from the second address of the second computing device and write the target data to the third address of the first computing device.

It should be added that the first computing device may further monitor a usage status of each local memory. For example, the first computing device includes a DDR SDRAM linked to a CPU, an HBM on a GPU, and an expanded memory. The first computing device detects that usage of the DDR SDRAM is 70%, usage of the HBM is 50%, and usage of the expanded memory is 20%. Similarly, another computing device may also monitor a usage status of each local memory of the another computing device. Subsequently, the first computing device may obtain a usage status of each memory of each computing device in a computing cluster to which the first computing device belongs, and obtain a usage status of each memory of each computing device in another computing cluster. When obtaining the access request (specifically, the write request) of the application, the first computing device may determine, based on a usage status of each memory in the entire data processing system, a memory into which the target data in the write request is to be written. For example, the first computing device comprehensively considers the usage status of each memory and latency of accessing each memory by the first computing device (that is, latency of accessing a device attached memory, latency of accessing a device local memory, latency of accessing a small network memory, and latency of accessing a large network memory), and selects, from a plurality of memories, the memory into which the target data is to be written. When the selected memory is located in the first computing cluster, the first computing device may store the target data into the memory based on the ultra-low latency communication protocol. When the selected memory is located in another computing cluster (for example, the second computing cluster), the first computing device may write the target data into the memory based on the RDMA protocol. Further, for an implementation in which the first computing device obtains a usage status of each memory of each of other computing devices in the computing cluster to which the first computing device belongs, and the first computing device obtains the usage status of each memory of each computing device in the another computing cluster, refer to the descriptions in the related embodiment in FIG. 5. In this case, the thin solid line circle refers to a computing device, and the thick solid line circle refers to a network device.

It should be further added that the first computing device may further monitor a frequency at which data stored in each local memory is read by the first computing device. Similarly, another computing device may also monitor a frequency at which data stored in each local memory is read by the first computing device. Subsequently, the first computing device may obtain a frequency at which data stored in each memory of each of the other computing devices in the computing cluster to which the first computing device belongs is read by the first computing device, and obtain a frequency at which data stored in each memory of each computing device in the another computing cluster is read by the first computing device. When the first computing device determines that a frequency at which a piece of data is read by the first computing device is inconsistent with a frequency range corresponding to a memory in which the data is located, the first computing device may move the data to a memory corresponding to a frequency range to which the frequency at which the data is read belongs. It may be understood that memories correspond to different frequency ranges. For example, a DDR SDRAM of the computing device 1 corresponds to a frequency range 1, an HBM of the computing device 1 corresponds to a frequency range 2, an expanded memory of the computing device 1 corresponds to a frequency range 3, a memory of the computing device 2 corresponds to a frequency range 4, and a memory of the computing device 5 corresponds to a frequency range 5, where the frequency range 1, the frequency range 2, the frequency range 3, the frequency range 4, and the frequency range 5 decrease sequentially. For example, if the first computing device detects that data 1 is located in the memory of the computing device 5, and a frequency at which the first computing device reads the data 1 is within the frequency range 1, the first computing device needs to move the data 1 to the DDR SDRAM of the computing device 1. For another example, if the first computing device detects that data 2 is located in the HBM of the computing device 1, and a frequency at which the first computing device reads the data 2 is within the frequency range 4, the first computing device needs to move the data 2 to the memory of the computing device 2. In this way, the first computing device may place data with a high read frequency in a memory with low read latency. This helps improve data read efficiency. Further, for an implementation in which the first computing device obtains the frequency at which the data stored in each memory of each of the other computing devices in the computing cluster to which the first computing device belongs is read by the first computing device, and the first computing device obtains the frequency at which the data stored in each memory of each computing device in the another computing cluster is read by the first computing device, refer to the descriptions in the related embodiment in FIG. 5. In this case, the thin solid line circle refers to a computing device, and the thick solid line circle refers to a network device.

Based on the foregoing same invention concept, this application provides a possible data processing system. The data processing system includes: a first computing cluster, including a first computing device; a second computing cluster, including a second computing device; and a first connection device, connected to the first computing device, and configured to manage memory address information of the first computing cluster that is provided by the first computing device and memory address information of the second computing cluster that is provided by the second computing device. The first computing device is configured to: receive an access request, where the access request is used to access memory space of the second computing device; search the memory address information of the second computing cluster that is managed by the first connection device for an address of the memory space; and access the memory space of the second computing device based on the address.

In a possible implementation, the data processing system further includes a network device, configured to connect the first computing cluster to the second computing cluster.

In a possible implementation, the first connection device is connected to the first computing device by using a CXL protocol or a UB protocol.

In a possible implementation, the first computing cluster further includes a third computing device, and the first connection device is configured to connect the first computing device to the third computing device. The first computing device is further configured to: obtain memory address information of the third computing device; perform addressing based on the memory address information of the third computing device and memory address information of the first computing device, to form the memory address information of the first computing cluster; and send the memory address information of the first computing cluster to the first connection device.

In a possible implementation, the memory address information of the first computing device includes information about a plurality of memories of the first computing device, and the memory address information of the third computing device includes information about a plurality of memories of the third computing device.

In a possible implementation, the first connection device is further configured to: receive the memory address information of the first computing cluster from the first computing device; and/or receive the memory address information of the second computing cluster from the second computing device.

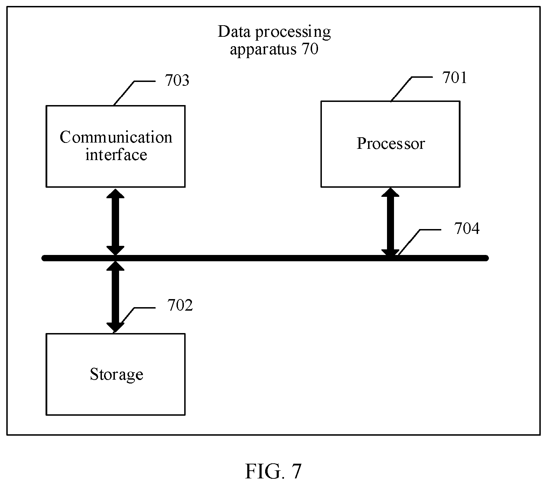

Based on the foregoing same invention concept, for example, FIG. 7 shows a data processing apparatus 70 according to an embodiment of this application. The data processing apparatus 70 is applicable to the flowchart shown above, to perform a function of the first computing device or the first connection device in the foregoing method embodiments. For ease of description, FIG. 7 shows only main components of the apparatus.

The data processing apparatus 70 includes a processor 701, a storage 702, and a communication interface 703. Any two of the processor 701, the storage 702, and the communication interface 703 may be connected through a bus 704.

The processor 701 may be a central processing unit (central processing unit, CPU). The CPU may be configured to execute program instructions in the storage 702 to implement operations in the method embodiments related to FIG. 4 to FIG. 6. In addition to the CPU, the processor 701 may be an application-specific integrated circuit (application-specific integrated circuit, ASIC), a field programmable gate array (field programmable gate array, FPGA), a system on a chip (system on a chip, SoC), a complex programmable logic device (complex programmable logic device, CPLD), a graphics processing unit (graphics processing unit, GPU), a neural-network accelerator (neural-network processing unit, NPU), or the like.

It should be noted that, during actual application, there may be a plurality of processors 701. The plurality of processors 701 may include a plurality of processors of a same type, or may include a plurality of processors of different types. For example, the plurality of processors 701 are a plurality of CPUs. For another example, the plurality of processors 701 include one or more CPUs and one or more GPUs. For still another example, the plurality of processors 701 include one or more CPUs and one or more NPUs. Alternatively, the plurality of processors 701 include one or more CPUs, one or more GPUs, one or more NPUs, and the like. The processor 701 (for example, a CPU or an NPU) may include one core, or include a plurality of cores.

The storage 702 is an apparatus configured to store program instructions and/or data, and may be a memory or a hard disk.

The memory is an internal storage that directly exchanges data with the processor 701. The memory can read and write data at any time at a high speed, and is used as a temporary data storage of an operating system running on the processor 701 or another running program. The memory includes a volatile memory (volatile memory), for example, a random access memory (random access memory, RAM) or a dynamic random access memory (dynamic random access memory, DRAM), may include a non-volatile memory (non-volatile memory), for example, a storage class memory (storage class memory, SCM), or may include a combination of a volatile memory and a non-volatile memory, or the like. During actual application, a plurality of memories may be configured in the data processing apparatus 70. Optionally, the plurality of memories may be of different types. A quantity of memories and a type of the memory are not limited in this embodiment. In addition, the memory may be configured to have a power protection function. The power protection function means that data stored in the memory is not lost when a system is powered off and then powered on again. The memory having the power protection function is referred to as a non-volatile memory.

The hard disk includes but is not limited to a non-volatile memory (non-volatile memory), for example, a read-only memory (read-only memory, ROM), a hard disk drive (hard disk drive, HDD), or a solid-state drive (solid-state drive, SSD). Different from the memory, the hard disk has a slow read/write speed and is usually used to store data persistently. In an implementation, data, program instructions, and the like in the hard disk need to be first loaded into the memory, and then the processor obtains the data and/or the program instructions from the memory.

The communication interface 703 is configured to communicate with another device. For example, when the data processing apparatus 70 is a first computing device, the communication interface 703 is configured to: receive, by the first computing device, an access request, send a query request to a connection device, receive a query response from the connection device, and the like. When the data processing apparatus 70 is a connection device, the communication interface 703 is configured to: receive, by the connection device, a query request from a first computing device, send a query response to the first computing device, and the like.

Based on the foregoing same invention concept, this application provides a computer-readable storage medium. The computer-readable storage medium stores a computer program or instructions. When the computer program or the instructions are executed by a device, the method in the method embodiments related to FIG. 4 to FIG. 6 is implemented.

Based on the foregoing same invention concept, this application provides a computer program product. The computer program product includes a computer program or instructions. When the computer program or the instructions are executed by a device, the method in the method embodiments related to FIG. 4 to FIG. 6 is implemented.

Based on the foregoing same invention concept, this application provides a device, including a processor. The processor is connected to a storage. The storage is configured to store a computer program. The processor is configured to execute the computer program stored in the storage, so that the device implements the method in the method embodiments related to FIG. 4 to FIG. 6.

Based on the foregoing same invention concept, this application provides a data processing apparatus. The data processing apparatus may be specifically the first computing device or the first connection device in the method embodiments related to FIG. 4 to FIG. 6. Correspondingly, when the data processing apparatus is the first computing device, the data processing apparatus may include a module (such as a transceiver module, a search module, and an access module) configured to perform a function of the first computing device. When the data processing apparatus is the first connection device, the data processing apparatus may include a module (for example, a transceiver module and a management module) configured to perform a function of the first connection device.

In this application, "at least one" means one or more, and "a plurality of" means two or more. "At least one of the following items (pieces)" or a similar expression thereof means any combination of these items, including a single item (piece) or any combination of a plurality of items (pieces). For example, at least one of a, b, or c may represent a, b, c, a and b, a and c, b and c, or a, b, and c, where a, b, and c may be singular or plural. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" generally represents an "or" relationship between the associated objects. In a formula in this application, the character "/" represents a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

It is clear that a person skilled in the art can make various modifications and variations to this application without departing from the protection scope of this application. This application is intended to cover these modifications and variations of this application provided that they fall within the scope of protection defined by the following claims and their equivalent technologies.

## Claims

1. A data processing system, comprising:
a first computing cluster, comprising a first computing device;
a second computing cluster, comprising a second computing device; and
a connection device, connected to the first computing device, and configured to manage memory address information of the first computing cluster that is provided by the first computing device and memory address information of the second computing cluster that is provided by the second computing device, wherein
the first computing device is configured to:
receive an access request, wherein the access request is used to access memory space of the second computing device;
search the memory address information of the second computing cluster that is managed by the connection device for an address of the memory space; and
access the memory space of the second computing device based on the address.

2. The system according to claim 1, further comprising:
a network device, configured to connect the first computing cluster to the second computing cluster.

3. The system according to claim 1, wherein the connection device is connected to the first computing device by using a compute express link CXL protocol or a unified bus UB protocol.

4. The system according to claim 1, wherein the first computing cluster further comprises a third computing device, and the connection device is configured to connect the first computing device to the third computing device; and
the first computing device is further configured to:
obtain memory address information of the third computing device;
perform addressing based on the memory address information of the third computing device and memory address information of the first computing device, to form the memory address information of the first computing cluster; and
send the memory address information of the first computing cluster to the connection device.

5. The system according to claim 4, wherein the memory address information of the first computing device comprises information about a plurality of memories of the first computing device; and
the memory address information of the third computing device comprises information about a plurality of memories of the third computing device.

6. The system according to claim 1, wherein the first computing device is further configured to:
after receiving the access request, determine, based on an address that the access request is used to access not belonging to a memory address of the first computing cluster, that the access request is an access request used to access the memory space of the second computing device.

7. The system according to any one of claims 1 to 6, wherein the connection device is further configured to:
receive the memory address information of the first computing cluster from the first computing device; and/or
receive the memory address information of the second computing cluster from the second computing device.

8. A data processing method, comprising:
receiving, by a first computing device, an access request, wherein the access request is used to access memory space of a second computing device in a second computing cluster; and sending a query request to a connection device, wherein the query request is used to query an address that the access request used to access address space of the second computing device is used to access, and the first computing device is located in a first computing cluster;
receiving, by the connection device, the query request, and sending the queried address to the first computing device based on the query request and memory address information of the second computing cluster; and
accessing, by the first computing device, the memory space of the second computing device based on the received address.

9. The method according to claim 8, further comprising:
managing, by the connection device, memory address information of the first computing cluster that is provided by the first computing device and the memory address information of the second computing cluster that is provided by the second computing device.

10. The method according to claim 8, wherein the connection device is connected to the first computing device by using a compute express link CXL protocol or a unified bus UB protocol.

11. The method according to claim 8, wherein the first computing cluster further comprises a third computing device, and the connection device is configured to connect the first computing device to the third computing device; and
the method further comprises:
obtaining, by the first computing device, memory address information of the third computing device;
performing, by the first computing device, addressing based on the memory address information of the third computing device and memory address information of the first computing device, to form memory address information of the first computing cluster; and
sending, by the first computing device, the memory address information of the first computing cluster to the connection device.

12. The method according to claim 11, wherein the memory address information of the first computing device comprises information about a plurality of memories of the first computing device; and
the memory address information of the third computing device comprises information about a plurality of memories of the third computing device.

13. The method according to claim 8, wherein after the receiving, by a first computing device, an access request, the method further comprises:
determining, by the first computing device based on an address that the access request is used to access not belonging to a memory address of the first computing cluster, that the access request is an access request used to access the memory space of the second computing device.

14. The method according to any one of claims 8 to 13, further comprising:
receiving, by the connection device, the memory address information of the first computing cluster from the first computing device; and/or receiving the memory address information of the second computing cluster from the second computing device.

15. A connection device, comprising:
a transceiver module, configured to receive a query request sent by a first computing device in a first computing cluster, wherein the query request is used to query an address that an access request used to access address space of a second computing device in a second computing cluster is used to access; and
a management module, configured to send the queried address to the first computing device based on the query request and memory address information of the second computing cluster, wherein
the connection device is connected to the first computing device in the first computing cluster, and the connection device is configured to manage memory address information of the first computing cluster that is provided by the first computing device and the memory address information of the second computing cluster that is provided by the second computing device.

16. The connection device according to claim 15, wherein the transceiver module is further configured to:
receive the memory address information of the first computing cluster from the first computing device; and/or receive the memory address information of the second computing cluster from the second computing device.
